# EUROPEAN PATENT APPLICATION

(11) **EP 3 595 185 A1**
(43) Date of publication of application: **15.01.2020**
(21) Application number: 18172250.5
(22) Date of filing: 15.05.2018
(51) Int. Cl.: H04B 5/00

(54) **CAPACITIVELY COUPLED CONNECTOR AND CABLE ASSEMBLY USING THE SAME**

(71) Applicant: TE Connectivity Nederland B.V., 5222 AR s'Hertogenbosch (NL)
(72) Inventor: HABRAKEN, Gied, 5551 HX Valkenswaard (NL); GILS van, Wijnand, 4942 CG Raamsdonksveer (NL); KROGT van der, Jasper, 5235 NA s-Hertogenbosch (NL)
(74) Representative: Grünecker Patent- und Rechtsanwälte PartG mbB

(57) **Abstract**

The present invention relates to a capacitive coupled connector for coupling a data transmission path and a cable assembly using the capacitive coupled connector. The connector comprises: a plurality of capacitive coupling links adapted to respectively transmit one or more modulated signals between a first side and a second side of the connector, each capacitive coupling link including: a first conducting element electrically coupled to the first side of the connector; and a second conducting element electrically coupled to the second side of the connector. The first conducting element has a portion that overlaps a portion of the second conducting element at a respective intermediate region between the first and second sides of the connector, the overlapping portions of the first and second conducting elements being separated by a respective dielectric gap that capacitively couples the first and second conducting elements of the respective capacitive coupling link.

## Description

### TECHNICAL FIELD OF THE INVENTION

The present invention relates to capacitive coupled connectors or interconnects for terminating and/or interconnecting transmission lines that provide the functionality of transmitting data and/or control signals across the connector or interconnect via capacitive coupling.

### BACKGROUND OF THE INVENTION

Contactless coupling technology has been widely utilized for their various advantages over conventional connectors based on a direct electrical contact between electrodes. A general problem of such conventional electrical connectors lies in that the wear at the interface of connector contacts has a huge impact on the operability of the connector and significantly reduces the amount of mating cycles the connector is able to endure. In contrast, contactless couplers are less prone to contact failures and current leaks, allow an unlimited number of mating cycles with reduced wear and tear of the coupling contacts, and can be operated under dirty or harsh environments.

Moreover, certain technical applications were several cable sections and interconnects need to be bridged, such as in robot arms, require a more flexible connectivity solution. A contactless connectivity solution that enhances the mechanical flexibility of the interconnects allows to significantly reduce the risk of communication loss during robot activities, for e.g. due to cable breakage. Contactless couplers are already being used in a variety of industrial applications such as robotics technology, rotary applications and molding equipment. Several configurations of contactless couplers for the transmission of power by inductive coupling are available on the market. For instance, contactless coupling has been employed in Ariso technology, which combines inductively coupled links for the transmission of power with radiofrequency (RF) data links for the transmission of data signals. So far, all these solutions were meant for bridging only one air gap, not for creating full end-to-end transmission paths, including several connectors and interconnected cables. In order to extend the length of transmission path, multiple interconnections could be created along the transmission line. However, conventional interconnects introduce significant insertion losses along the transmission line, which particularly affects the transmission of modulated signals at frequencies in the radio frequency range, such as RF data signals. Electronics may be added at each side of the interconnect to compensate for the losses introduced in the transmission path and reshape the modulated data signal. However, the additional electronics and interfacing results in increased costs and complexity of the interconnected cable, and reduces the cable flexibility.

Hence, there is a need for an improved capacitive coupled connector and cable suitable for the transmission of modulated signals, and more particularly, RF data signals, without significant losses and which remedies the afore-mentioned disadvantages.

### SUMMARY OF THE INVENTION

The present invention has been made in view of the shortcomings and disadvantages of the prior art, and an object thereof is to provide a capacitive coupled connector and a cable assembly having interconnects of the capacitive coupled connector type that can be applied for data signal transfers and which can be freely rotated/moved without wear of the connector contacts.

A concept underlying the present invention is to propose a capacitive coupled connector and a cable assembly having one or multiple transmission lines interconnected by one or more capacitive coupled connectors which allows for transmission of data signals with reduced signal loss due to the data signal being transmitted via capacitive coupling, while allowing more flexibility and freedom of rotation between interconnected transmission lines without loss of efficiency due to the contactless character of the capacitive coupling.

This object is solved by the subject matter of the independent claims. Advantageous embodiments of the present invention are subject matter of the dependent claims.

According to the present invention, it is provided a capacitive coupled connector for coupling a data transmission path, the capacitive coupled connector comprising: a plurality of capacitive coupling links adapted to respectively transmit one or more modulated signals between a first side and a second side of the connector, each capacitive coupling link including: a first conducting element electrically coupled to the first side of the connector; and second conducting element electrically coupled to the second side of the connector; wherein the first conducting element has a portion adapted to overlap a portion of the second conducting element at a respective intermediate region between the first and second sides of the connector, and wherein the overlapping portions of the first and second conducting elements are separated by a respective dielectric gap adapted to capacitively couple the first and second conducting elements of the respective capacitive coupling link.

According to a further development, the dielectric gap is a separation gap filled with air or with an insulating, solid dielectric material.

In a further development, for at least two of the plurality of capacitive coupling links, the respective first and second conducting elements overlap at different positions along a longitudinal axis of the capacitive coupled connector.

According to a further development, the first and second sides of the capacitive coupled connector are separate connector parts adapted to be engaged and disengaged, the first connector part comprising the first conducting elements of the capacitive coupling links, the second connector part comprising the second conducting elements of the capacitive coupling links.

According to a further development, for at least one of the capacitive coupling links: the first conducting element is adapted to partially protrude from the first connector part to mate with the corresponding second conducting element in the second connector part; and/or the second conducting element is adapted to partially protrude from the second connector part to mate with the corresponding first conducting element in the first connector part.

According to a further development, the first and second conducting elements of each capacitive coupling link have rotational symmetry at the respective overlapping portions for allowing a degree of rotation between the first and second connector parts.

According to a further development, the degree of rotation is substantially 360° around a longitudinal axis of the capacitive coupled connector.

According to a further development, for at least one capacitive coupling link: the first and second conducting elements are arranged so as to extend from the first side and the second side of the connector towards the intermediate region, respectively, along a longitudinal axis of the connector, and are positioned at different radial distances from the longitudinal axis so that the dielectric gap between the portion of the first conducting element that overlaps the portion of second conducting element forms a capacitive coupling in the radial direction.

According to a further development, for at least one capacitive coupling link the first and second conducting elements are each provided as curved plates, hollow tubes, and rings, or a combination thereof.

According to a further development, for at least one capacitive coupling link: the first and second conducting elements are arranged so as to extend from the first side and the second side of the connector towards the intermediate region, respectively, substantially along the same longitudinal direction.

According to a further development, for at least one capacitive coupling link: each of the first and second conducting elements are terminated by a disc or plate adapted to face each other at the intermediate region so that the dielectric gap between the portion of the first conducting element that overlaps the portion of second conducting element forms a capacitive coupling in the longitudinal direction.

According to a further development, for at least one capacitive coupling link: the first conducting element is a hollow or a blind tube and the second conducting element terminates with a protrusion adapted to fit inside the hollow or blind tube, the partially fitted protrusion being separated from the inner walls of the hollow or blind tube by the dielectric gap.

According to a further development, the conducting elements of each capacitive coupling link are adapted to provide a capacitive coupling for transmitting a modulated data signal across the capacitive coupled connector, and/or the one or more data signals are radio frequency signals.

The present invention also provides a cable assembly for data signal transmission, the cable comprising: a plurality of transmission cables including one or more transmission channels for transmitting one or more modulated signals along the cable assembly; and one or more capacitive coupled connectors according to any one of the preceding claims, wherein the transmission channels of each two transmission cables are interconnected by a respective capacitive coupled connector.

Since the capacitive coupled connector is capable of providing a stable and reliable, contactless coupling, it is suited to be used for interconnecting cables in harsh environments such as under moist or dirty conditions.

In addition, the concept underlying the present invention may also be advantageously employed in different sorts of technical applications, other than robotics, that can benefit from a short-range connectivity, cable link with capacitive coupled connectors.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
**Fig. 1** is a schematic longitudinal view of a capacitive coupled connector having a capacitive coupling link assembly (not shown);
**Fig. 2** is a schematic sectional view of a capacitive coupled connector taken along a longitudinal direction AA' of the connector, and showing a capacitive coupling link assembly according to a first variant;
**Fig. 3** shows schematically a partial perspective view of a capacitive coupling link assembly according to a second variant;
**Fig. 4** is a schematic sectional view of a capacitive coupling link assembly for a capacitive coupling connector according to the second variant, viewed along a longitudinal direction of the connector;
**Fig. 5** is a schematic sectional view of a capacitive coupling link assembly for a capacitive coupling connector according to a third variant, viewed along a longitudinal direction of the connector;
**Fig. 6** is a schematic sectional view of a capacitive coupling link assembly for a capacitive coupling connector according to a fourth variant, viewed along a longitudinal direction of the connector; and
**Fig. 7** shows a side view of cable assembly including two capacitive coupled connectors according to the present invention.

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout.

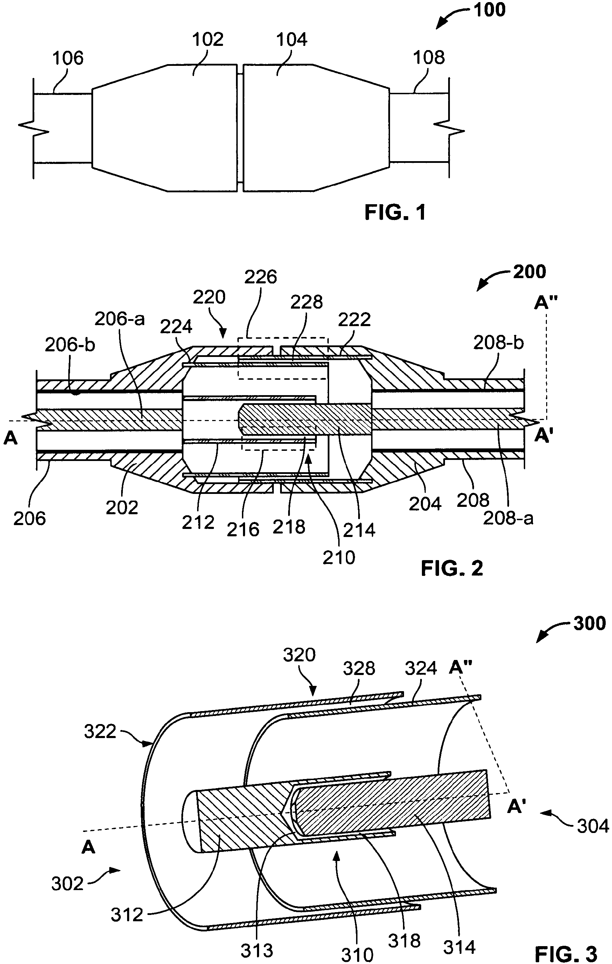

FIG. 1 shows in a schematic longitudinal view the external body of a capacitive coupled connector 100 in an assembled state. The capacitive coupled connector 100 has a first side 102 and a second side 104 to which respective data transmission cables 106 and 108 are and/or can be electrically connected. The transmission cables 106 and 108 may include one or multiple transmission channels (not shown) for transmitting one or more modulated signals, such as data and/or control signals. Depending on the number of transmission channels in each of the cables 106 and 108, the capacitive coupled connector 100 comprises one or more capacitive coupling links (not shown) for capacitive coupling each of the transmission channels arriving at the first connector side 102 to a respective transmission channel at the second connector side 104.

The capacitive coupling link(s) may adopt several configurations and/or variants, as it will be described below with reference to Figs. 2 - 6. These variants have in common that each capacitive coupling link is designed to provide a capacitive coupling strength suitable for transmitting the modulated data or control signal, in particular, a radio frequency signal, without transfer of electric charges from one side to the other side of the capacitive coupled connector. Moreover, each capacitive coupling link includes two or more conducting elements, preferably made of a good electrical conducting material such as a metal, where at least a first conducting element is provided for electrically connecting to a transmission channel at the first side 102 of the connector 100 and a second conducting element is electrically connected to the second side 104 of the connector 100. The first and second conducting elements are preferably arranged so as to extend from the first and second sides of the connector 100 towards an intermediate region between the first and second sides 102 and 104, respectively. The end portions of the first and second conducting elements are made to overlap, at least partially, at the intermediate region but without entering into direct physical contact. Instead, the separation gap between the overlapping portions of the first and second conducting elements is filled with a dielectric material so as to avoid the direct transfer of electrical charge through the gap and provide a suitable capacitance at the transmission frequency range of interest. The overlapping portions of each capacitive coupling link then act as capacitive electrodes which, together with the characteristics of the dielectric gap between them, determine the strength of capacitive coupling as it will now be described in the following.

Fig. 2 shows a schematic sectional view of a connector 200, taken along a longitudinal direction AA' of the connector 200, according to a first variant. Similarly to the connector 100 shown in Fig. 1, in this variant the connector 200 includes first and second sides 202 and 204 for connecting to respective transmission cables 206 and 208. In the illustrated example, the transmission cable 206 connected to the first connector side 202 includes two transmission lines (provided as separate conductors): an inner transmission line 206-a and an outer transmission 206-b. Each of the inner and outer transmission lines 206-a and 206-b are respectively coupled by the capacitive coupled connector 200 to inner and outer transmission lines 208-a and 208-b, i.e. to respective inner and outer conductors, of the transmission cable 208 at the second connector side 204. As mentioned above, the capacitive coupled connector may comprise one or more capacitive coupling links for respectively transmitting one or more modulated data signals across the capacitive connector, depending on the number of transmission channels to be connected. In the illustrated variant, the capacitive coupled connector 200 includes two capacitive coupling links 210 and 220. A first capacitive coupling link 210, also called hereinafter as inner capacitive coupling link, is arranged substantially along the central axis AA' of the capacitive coupled connector 200 for capacitive coupling the inner transmission channels 206-a and 208-a. The inner capacitive link 210 includes a first conducting element 212 that essentially extends from the first side 202 of the connector 200 towards the intermediate region between the first and second sides 202 and 204. A second conducting element 214 of the inner capacitive link 210 extends from the second side 204 of the connector 200 towards the intermediate region, where a portion of the second conducting elements 214 becomes overlapped by a corresponding portion of the first conducting element 212 at an overlapping region 216. As mentioned above, the overlapping portions of the first and second conducting elements 212 and 214 are separated by a dielectric gap 218 at the overlapping region 216, which determines the coupling strength of the inner capacitive coupling link 210. In the configuration illustrated in Fig. 2, the first conducting element 212 is provided as a hollow tube which extends substantially along the longitudinal direction AA' of the connector 200. The second conducting element 214 is provided as an extension or protrusion substantially parallel to the longitudinal axis AA' and with dimensions suitable for partially fitting into the hollow tube 212 but without entering in direct physical contact with the tube inner surfaces. The length of the overlapping portions of the hollow tube 212 and the extension 214, the size of their respective cross-sections, and the size of the separation gap 218, determine the strength of the capacitive coupling established between the inner transmission channels 206-a and 208-a.

The second capacitive coupling link 220, also called hereinafter as outer capacitive link, may be provided at a certain radial distance from the connector axis AA' and the first capacitive coupling link 210 for coupling the outer transmission channels 206-b and 208-b arriving at the first and second connector sides 202 and 204, respectively. The outer capacitive link 220 is preferably positioned at a distance from the inner capacitive link 210 that is sufficient for not interfering with transmitted signals. In addition, the space of the connector 200 between the inner and outer capacitive links 210 and 220 may be filled with a dielectric and/or insulating material for increasing insulation and avoiding electromagnetic interference between the inner and outer capacitive links 210, 220. Similarly to the first capacitive link 210, the second capacitive link 220 may also include a first conducting element 222 and a second conducting element 224 that are respectively connected to the outer transmission channel 208-b at the second side 204 and the outer transmission channel 206-b at the first side 202 of the connector 200. Each of the first and second conducting elements 222 and 224 extend from the respective sides of the connector 200 towards the intermediate region where respective end portions of the first and second conducting elements 222 and 224 overlap at an overlapping region 226. The overlapping portions of the first and second conducting elements 222 and 224 are separated by a respective dielectric gap 228 across which the capacitive coupling of the outer capacitive link 220 is established. In the present case, the first and second conducting elements 222 and 224 may be provided as hollow tubes with different cross-sections or radius, the cross-section difference being substantially equal to the desired width of the separation gap 218, such that the second conducting element 224 is fitted, at least partially, inside the first conducting element 222, without entering into direct physical contact with the inner walls of the hollow tube 222 . The fact that the first conducting element 222 in the outer capacitive link 220 partially covers the second conducting elements 224 defines a capacitive coupling in a radial direction of the connector 200, i.e. in the direction A'A" transverse to the direction of the signal transmission AA', and provides a shielding effect that prevents the modulated data signal transmitted along the outer transmission channels 206-b and 208-b to radiate to the outside of the connector 200 and/or to be perturbed by external electromagnetic fields. A similar shielding effect is also provided by the conducting element 212 of the inner capacitive link 210 with respect to the conducting element 214.

The longitudinal length of the conducting elements comprised in the inner and outer capacitive links 210 and 220 may be selected so that the longitudinal positions of the respective overlapping regions 216 and 226 do not coincide along the longitudinal direction AA', so as to improve the quality of transmission of the modulated signals across the connector 200. The fact that one of the conducting elements 222 and 224 of the outer capacitive link 220 are arranged so as to surround the conducting elements 212 and 214 of the inner capacitive link 210 also provides an additional shielding protection to the inner capacitive coupling 210 against electromagnetic external interferences.

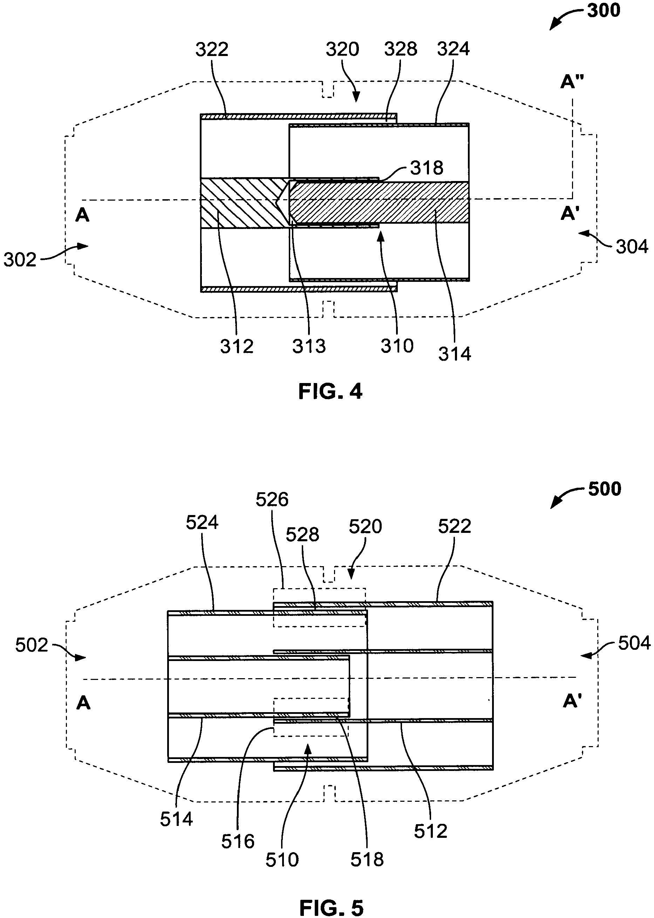

Fig. 3 shows schematically a partial perspective view of a capacitive coupling link assembly 300 for a capacitive coupled connector according to a second variant. In this variant, the capacitive coupling assembly 300 includes first and a second capacitive coupling links 310 and 320 for respectively coupling data transmission channels from a first side 302 to a second side 304 of the capacitive link assembly 300. The inner capacitive link 310 includes a first conducting element 312 and a second conducting element 314 arranged substantially along the longitudinal axis AA', which preferably coincides with the central axis of the capacitive coupled connector (not shown). The first conducting element 312 has the form of a blind tube that extends from the first side 302 towards the second side 304 and has a cavity for receiving an end part of the second conducting element 314, which may be have the shape of a longitudinal protrusion extending from the second side 304 towards the first side 302. The cross-section of the protrusion 314 and the inner diameter of the cavity 313 are such so that the second conducting element 314 does not enter into direct contact with the first conducting element 312 when fitted into the cavity 313, thereby forming a dielectric gap 318. Due to the particular shape of the first and second conducting elements 310 and 314, the capacitive coupling is established in both the radial direction A'A" as well as in the longitudinal direction AA', i.e. between the bottom of the cavity 313 and the end side of the protrusion 314. The second capacitive coupling link 320 includes first and second conducting elements 322 and 324 with the shape of hollow tubes that are arranged around the longitudinal axis AA' and disposed with respect to the first capacitive link 310 in a concentric manner such as to be positioned at a certain radial distance from the connector axis AA'. The conducting elements 322 and 324 have characteristics similar to those described above with reference to the outer capacitive link 220 of Fig. 2, and therefore, will not be described in detail here. A schematic sectional view of the capacitive coupling link assembly 300 is illustrated in Fig. 4.

Fig. 5 shows a schematic sectional view of a capacitive coupling link assembly 500 for a capacitive coupling connector according to a third variant, when viewed along the longitudinal direction AA'. In this variant, the capacitive coupling assembly 500 includes first and a second capacitive coupling links 510 and 520 for respectively coupling data transmission channels from a first side 502 to a second side 504 of the capacitive link assembly 500. The inner capacitive link 510 includes a first conducting element 512 and a second conducting element 514 with the shape of hollow tubes that extend substantially along the longitudinal axis AA'. The first conducting element 512 has a cross-section suitable for receiving an end portion of the second conducting element 514, thereby enclosing the second conducting element 514 over an overlapping region 516 while being separated by a dielectric gap 518. The outer capacitive link 520 includes first and second conducting elements 522 and 524, in the form of longitudinal hollow tubes which have characteristics similar to those described above with reference to the first and second conducting elements 222, 224 of the capacitive coupling link 220 in Fig. 2. Therefore, the details of the outer capacitive link 520 will not be repeated here.

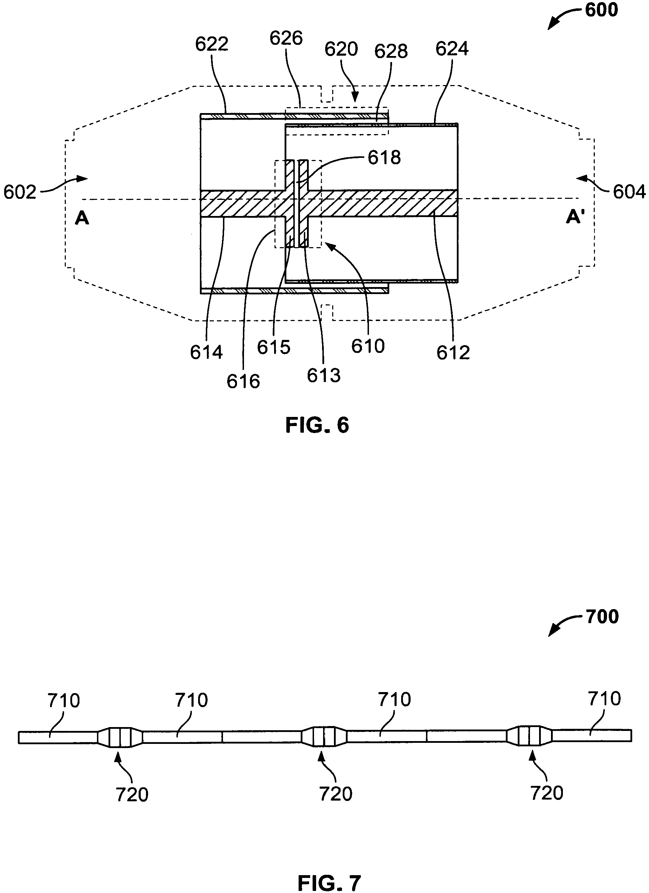

Fig. 6 shows a schematic sectional view of a capacitive coupling link assembly 600 for a capacitive coupling connector according to a fourth variant, when viewed along a longitudinal direction AA'. In this variant, the capacitive coupling assembly 600 includes first and a second capacitive coupling links 610 and 620 for respectively coupling data transmission channels from a first side 602 to a second side 604 of the capacitive link assembly 400. The inner capacitive link 610 includes a first conducting element 612 and a second conducting element 614 that extend substantially along the longitudinal axis AA' from the first and second sides 602 and 604 towards an intermediate region between the first and the second sides, respectively. The first and second conducting elements 612 and 614 are each terminated by respective flat electrodes 613 and 615, for e.g. having the shape of a plate or disk. The flat electrodes 613 and 615 overlap at an overlapping region 616 with a separation gap 618 across which the capacitive coupling is established. The outer capacitive link 620 includes first and second conducting elements 622 and 624 with the shape of hollow tubes that are arranged around the longitudinal axis AA' in a concentric manner and at a certain radial distance from the connector axis AA'.

The conducting elements 622 and 624 and the respective capacitive coupling link 620 have characteristics similar to those described above with reference to the outer capacitive link 220 and 520 illustrated in Figs. 2 and 5, respectively, and therefore will not be described in detail here. In the variant of Fig. 6, the inner capacitive coupling link 610 provides the capacitive coupling in the transmission direction of the modulated signal along the transmission cables, i.e. the longitudinal direction AA', whereas the outer capacitive coupling link 620 establishes a capacitive coupling in the radial direction. Similarly to the variants described above, as all conducting elements in the configuration of Fig. 6 have full rotational symmetry around the axis AA' (i.e. 360°), a connector implemented with this variant has the advantage of the first and second connector parts being freely rotatable around the axis AA' when the two connector parts 602 and 604 are engaged together and without causing wear between the surfaces of the conducting elements of each capacitive coupling link.

The first and second sides of any of the capacitive coupled connector configurations and/or capacitive coupling assemblies described above with reference to Figs. 1 to 6 may be provided in separate connector parts adapted to be engaged and disengaged from each other. In this case, the first conducting elements of the connector capacitive coupling links may be arranged on the first connector part to be electrically connected to the transmission channels of the transmission cable coupled to the first side of the connector. The second conducting elements of the capacitive coupling link(s) are then preferably arranged in the second connector part and electrically connected to the transmission channels of the transmission cable at the second side of the connector. In this case, the first and second conducting elements arranged at each first and second connector parts are made to overlap at the respective overlapping portions when the first and second connector parts are engaged together, thereby establishing the capacitive coupling links between the first and second side of the connector. This has the advantage that the coupling between transmission lines can be easily established or interrupted by simply engaging or disengaging the connector parts.

Furthermore, if the dielectric gaps of the capacitive coupling links are at a different longitudinal positions between the first and second side of the capacitive coupled connector, the quality of the capacitive coupling may be improved. The length of the overlapping portions of the conducting elements in any of the inner and outer capacitive coupling links of the variants described above, including the size of the respective dielectric gaps, determine the strength of the capacitive coupling across the capacitive coupled connector, as described already with reference to Fig. 2. The dimensions of the capacitive coupler areas are dependent on the amount of capacitance that can be achieved. A typical, practical value for the capacitance would be around 3pF and the higher this value, the better the signal transfer will be. Current simulation results show that this capacitance value for the inner and outer conductors can be integrated in a connector within volumes with a length below 20mm and a diameter between 8-20mm.

The outer capacitive coupling link of any of the variants described above may be positioned at a radial distance sufficient for not interfering with the inner capacitive coupling link, and the space between the inner and outer capacitive coupling links may be filled with a dielectric and/or insulating material for increasing insulation and avoiding electromagnetic interference between the inner and outer capacitive links. The shield effects and advantages described with reference to Fig. 2 may also be achieved with any of the capacitive coupling configurations described with reference to Figs. 3 - 6.

The variation of the capacitive coupling is limited only by the nature of the connector design. Therefore, multiple capacitively coupled connectors can be cascaded in series for interconnecting multiple transmission cables that enables the possibility of an end-to-end transmission path without the need to reshape the signal by means of electronics. By having one or more capacitive coupled connectors inserted along a transmission path, in which all conducting elements going from the first side to the second side of the respective capacitive coupled connector are separated by a dielectric gap, a cascade arrangement of capacitances in series can be created along the transmission path without significant losses caused by the insertion of the capacitive coupling links. In this way, a modulated signal can be transmitted over a wide frequency band range, namely, with typical radio frequencies between 1 GHz and 9 GHz, though starting from a minimum frequency that is not zero.

Fig. 7 shows a side view of cable assembly 700 interconnected with capacitive coupled connectors 720 according to any of the variants described above, or combinations thereof.

The cable assembly 700 includes a plurality of transmission cables 710 including one or more transmission channels (not shown) for transmitting one or more modulated signals along the cable assembly 700, such as data radio frequency signals. The transmission lines of each two transmission cables 710 are interconnected by a respective capacitive coupled connector 720. The number of capacitive coupled connectors 720 in the cable assembly 700 is not limited to three, such as illustrated in Fig. 7, but may include one or more than two capacitive coupled connectors 720 depending on the application and number of transmission cables 710 to be interconnected. Further, the cable assembly 700 may include capacitive coupled connectors 720 of a same type, as illustrated in Fig. 7, or a combination of two or more of the variants described above with reference to Figs. 2 - 6.

Consequently, since each data channel arriving at a side of the capacitive coupled connector 720 is coupled via a dedicated capacitive coupling link to a respective data channel at the opposed side of the same connector 720, the present invention provides a capacitive coupling solution that allows to capacitive couple multiple transmission channels transmitting modulated signals with different frequencies and/or signal strengths with a single capacitive coupled connector. Moreover, the present invention makes possible to customize each capacitive coupling link based on the characteristics of the modulated signal to be transmitted, such as number and geometry of conducting elements as well as the position and size of the overlapping regions and the dielectric gap.

The strength of the capacitive coupling may also be tuned by selecting a suitable dielectric material for the separation gap of each capacitive coupling link. Namely, different capacitive coupling links may be provided with different dielectric materials in the separation gap in the same capacitive coupled connector. For certain applications, it might be advantageous that the dielectric gap of a capacitive coupling link is filled with an insulating gas, such as air. This choice has the advantage that the conducting elements of the capacitive coupling link are not in direct contact with each other, and therefore, can be freely rotated without causing tear or wear at the overlapping surfaces. On the other hand, due to the low dielectric constant of air in comparison with other dielectric materials commonly used in capacitive applications, the choice of air as dielectric material for the separation gap may require higher separation distances between the overlapping portions of the capacitive coupling link in order to achieve the desired capacitive strength, which might increase the cross-section and overall dimensions of the capacitive coupled connector. The use of a dielectric material with higher dielectric constant than air presents the advantages of facilitating the customization of the capacitive coupling link strength and/or of reducing the size of the conducting elements and separation gap. For instance, the dielectric material may be deposited over the opposed surfaces of each conducting element of a capacitive coupling link, or only on the surfaces corresponding to the overlapping region. This solution also allows increasing the robustness of the capacitive coupled connector and/or the stability of the mechanical connection between the connector parts in case the body of the capacitive coupled connector is formed with disengageable parts. For a capacitive coupled connector with disengageable parts, the use of a dielectric filler other than gas between the electrodes of the capacitive coupling link has the drawback that the connector is more prone to wear due to the friction between the conducting elements and the dielectric material.

Due to the capacitive coupling described for the variants above, the connector interface becomes flexible w.r.t. rotational freedom. Further, since there is no wear of the contacts, the number of mating cycles of the capacitive coupled connector is not limited anymore by the contacts.

Although the variants for a capacitive coupling link assembly and respective capacitive coupled connector have been described above with reference to two data channels along the transmission path, the claimed invention is not limited to the illustrated number of data channels and the capacitive coupled connector may include one or multiple capacitive coupling links as many as necessary for capacitively coupling one or multiple data channels arriving at each side of the capacitive coupled connector. Moreover, the claimed invention is not limited to capacitive coupled connectors for coaxial cables having an inner and an outer transmission lines, as illustrated in Figs. 2 - 6. For instance, the capacitive coupled connector according to the invention may include multiple capacitive coupling links arranged side-by-side, such as for coupling transmission lines that run in parallel, side-by-side, instead of in a concentric manner.

It should be noted that although the terms "first side" and "second side" in the exemplary embodiments described above identify the left and right sides along a same longitudinal direction AA', these terms should not be construed as limiting the claimed invention or any of its components to the illustrated orientations and/or to a particular longitudinal axis, but rather as referring to sides of the connector to which respective transmission lines are to be coupled, and may generally refer to opposed sides along a given direction, such as an "upper side" and a "lower side" of the connector.

### Reference Signs

- 100: capacitive coupled connector
- 102: first side
- 104: second side
- 106: data transmission cable
- 108: data transmission cable

- 200: capacitive coupled connector
- 202: first side
- 204: second side
- 206: data transmission cable
- 206-a, 206-b: transmission channels
- 208: transmission cable
- 208-a, 208-b: transmission channels
- AA': longitudinal axis
- A'A": radial axis (transverse to AA')
- 210: inner capacitive link
- 212: first conducting element
- 214: second conducting element
- 216: overlapping region of inner capacitive link
- 218: dielectric gap of inner capacitive link

- 220: outer capacitive link
- 222: first conducting element
- 224: second conducting element
- 226: overlapping region of outer capacitive link
- 228: dielectric gap of outer capacitive link

- 300: capacitive coupling assembly
- 302: first side
- 304: second side
- 310: inner capacitive link
- 312: first conducting element
- 313: cavity
- 314: second conducting element, protrusion
- 318: dielectric gap of first capacitive link
- 320: outer capacitive link
- 322: first conducting element
- 324: second conducting element
- 328: dielectric gap of second capacitive link
- AA': longitudinal axis of capacitive coupling assembly
- A'A": radial axis of capacitive coupling assembly

- 500: capacitive coupling assembly
- 502: first side
- 504: second side

- 510: inner capacitive link
- 512: first conducting element
- 514: second conducting element
- 516: overlapping region
- 518: dielectric gap of inner capacitive link

- 520: outer capacitive link
- 522: first conducting element
- 524: second conducting element
- 526: overlapping region
- 528: dielectric gap of outer capacitive link

- 600: capacitive coupling assembly
- 602: first side
- 604: second side
- 610: inner capacitive link
- 612: first conducting element
- 613: disc
- 614: second conducting element
- 615: disc
- 616: overlapping region
- 618: dielectric gap of inner capacitive link
- 620: outer capacitive link
- 622: first conducting element
- 624: second conducting element
- 626: overlapping region
- 628: dielectric gap of outer capacitive link
- AA': longitudinal axis

- 700: cable assembly
- 710: transmission cable
- 720: capacitive coupled connector

## Claims

1. A capacitive coupled connector for coupling a data transmission path, the capacitive coupled connector comprising:
a plurality of capacitive coupling links (210; 220; 310; 320; 510; 520; 610; 620) adapted to respectively transmit one or more modulated signals between a first side (102; 202; 302; 502; 602) and a second side (104; 204; 304; 504; 604) of the connector, each capacitive coupling link including:
a first conducting element (212; 222; 312; 322; 512; 522; 612; 622) electrically coupled to the first side (102; 202; 302; 502; 602) of the connector; and
a second conducting element (214; 224; 314; 324; 514; 524; 614; 624) electrically coupled to the second side (104; 204; 304; 504; 604) of the connector;
wherein the first conducting element (212; 222; 312; 322; 512; 522; 612; 622) has a portion adapted to overlap a portion of the second conducting element (104; 204; 304; 504; 604) at a respective intermediate region between the first and second sides of the connector, and
wherein the overlapping portions (216, 226; 516, 526; 616, 626) of the first and second conducting elements are separated by a respective dielectric gap (218; 318; 418; 518; 618) adapted to capacitively couple the first and second conducting elements of the respective capacitive coupling link.

2. A capacitive coupled connector according to claim 1, wherein the dielectric gap (218; 318; 418; 518; 618) is a separation gap filled with air or with an insulating, solid dielectric material.

3. A capacitive coupled connector according to claim 1 or 2, wherein
for at least two of the plurality of capacitive coupling links (210, 220; 310, 320; 510; 520; 610, 620), the respective first and second conducting elements overlap at different positions along a longitudinal axis (AA') of the capacitive coupled connector.

4. A capacitive coupled connector according to any one of the preceding claims, wherein the first and second sides of the capacitive coupled connector are separate connector parts adapted to be engaged and disengaged, the first connector part comprising the first conducting elements (212; 222; 312; 322; 512; 522; 612; 622) of the capacitive coupling links (210, 220; 310, 320; 510; 520; 610, 620), the second connector part comprising the second conducting elements (214; 224; 314; 324; 514; 524; 614; 624) of the capacitive coupling links (210, 220; 310, 320; 510; 520; 610, 620).

5. A capacitive coupled connector according to claim 4, wherein for at least one of the capacitive coupling links (210; 220; 310; 320; 510; 520; 620):
the first conducting element (212; 222; 312; 322; 512; 522; 622) is adapted to partially protrude from the first connector part to mate with the corresponding second conducting element (214; 224; 314; 324; 514; 524; 624) in the second connector part; and/or
the second conducting element (214; 224; 314; 324; 514; 524; 624) is adapted to partially protrude from the second connector part to mate with the corresponding first conducting element (212; 222; 312; 322; 512; 522; 622) in the first connector part.

6. A capacitive coupled connector according to any one of the preceding claims, wherein
the first and second conducting elements of each capacitive coupling link have rotational symmetry at the respective overlapping portions for allowing a degree of rotation between the first and second connector parts.

7. A capacitive coupled connector according to claim 6, wherein
the degree of rotation is substantially 360° around a longitudinal axis (AA') of the capacitive coupled connector.

8. A capacitive coupled connector according to any one of the preceding claims, wherein for at least one capacitive coupling link (220; 320; 510; 520; 620):
the first and second conducting elements are arranged so as to extend from the first side (102; 202; 302; 502; 602) and the second side (104; 204; 304; 504; 604) of the connector towards the intermediate region, respectively, along a longitudinal axis (AA') of the connector, and are positioned at different radial distances from the longitudinal axis (AA') so that the dielectric gap between the portion of the first conducting element that overlaps the portion of second conducting element forms a capacitive coupling in the radial direction.

9. A capacitive coupled connector according to claim 8, wherein for at least one capacitive coupling link (220; 320; 510; 520; 620):
the first and second conducting elements are each provided as curved plates, hollow tubes, and rings, or a combination thereof.

10. A capacitive coupled connector according to any one of the preceding claims, wherein for at least one capacitive coupling link (210; 310; 610):
the first and second conducting elements (212, 214; 312, 314; 612, 614) are arranged so as to extend from the first side (202; 302; 602) and the second side (204; 304; 604) of the connector towards the intermediate region, respectively, substantially along the same longitudinal direction (AA').

11. A capacitive coupled connector according to claim 10, wherein for at least one capacitive coupling link (610):
each of the first and second conducting elements are terminated by a disc or plate (613, 615) adapted to face each other at the intermediate region so that the dielectric gap (618) between the portion of the first conducting element that overlaps the portion of second conducting element forms a capacitive coupling in the longitudinal direction.

12. A capacitive coupled connector according to claim 10, wherein for at least one capacitive coupling link:
the first conducting element is a hollow (212) or blind (312) tube and the second conducting element terminates with a protrusion (214; 314) adapted to partially fit inside the hollow (212) or blind (312) tube, the partially fitted protrusion (214; 314) being separated from the inner walls of the hollow or blind tube by the dielectric gap (218; 318).

13. A capacitive coupled connector according to any one of the preceding claims, wherein the conducting elements of each capacitive coupling link (210; 220; 310; 320; 510; 520; 610; 620) are adapted to provide a capacitive coupling for transmitting a modulated data signal across the capacitive coupled connector, and/or
wherein the one or more data signals are radio frequency signals.

14. A capacitive coupled connector according to any one of the preceding claims, wherein each of the first and second sides of the connector are adapted to terminate a data transmission line of a cable or an output of an electric device.

15. A cable assembly for data signal transmission, the cable comprising:
a plurality of transmission cables (106, 108; 206, 208; 710) including one or more transmission channels (206-a, 206-b; 208-a, 208-b) for transmitting one or more modulated signals along the cable assembly; and
one or more capacitive coupled connectors (200; 300; 500; 600; 720) according to any one of the preceding claims, wherein the transmission channels (206-a, 206-b; 208-a, 208-b) of each two transmission cables (206, 208) are interconnected by a respective capacitive coupled connector.
